# DEMANDE DE BREVET EUROPEEN

(11) **EP 1 530 116 A1**
(43) Date de publication de la demande: **11.05.2005**
(21) Numéro de dépôt: 04292246.8
(22) Date de dépôt: 20.09.2004
(51) Int. Cl.: G06F 1/00

(54) **Différenciation de contexte d'utilisation dans un ordinateur de poche**

(30) Priorité: 04.11.2003 FR 0312908
(71) Demandeur: FRANCE TELECOM, 75015 Paris (FR)
(72) Inventeur: Bidet, Jérome, 14210 Evrecy (FR); Dauguet, Anthony, 14260 Saint Pierre du Fresne (FR); Picard, Stéphane, 14000 Caen (FR)
(74) Mandataire: Joly, Jean-Jacques

(57) **Abrégé**

Ordinateur de poche comprenant une pluralité de programmes et de données (30, 40), le chargement et l'accès audits programmes et données étant gérés par un système d'exploitation (10). L'ordinateur de poche comprend des moyens (50) pour sélectionner un contexte d'utilisation parmi au moins deux contextes prédéfinis, et une base de données des contextes (20) qui comprend pour chaque contexte d'utilisation prédéfini une liste des programmes et des données associés. Le système d'exploitation (10) interroge, en réponse à la sélection d'un contexte d'utilisation, la base de données des contextes (20) de manière à activer parmi la pluralité de programmes et de données seulement les programmes et données associés audit contexte dans la base des contextes.

## Description

### Domaine de l'invention

La présente invention concerne le domaine des ordinateurs dits de poche et en particulier ceux du type assistant personnel numérique.

### Art antérieur

Les assistants personnels numériques (ou "PDA") sont des ordinateurs de poche qui, de par leur taille réduite et les ressources (processeur, mémoire) qu'ils proposent, constituent des outils de gestion pratiques et performants pour leurs utilisateurs. Ces appareils accompagnent les utilisateurs dans tous leurs déplacements pour leur apporter une aide dans la gestion, le traitement et/ou le stockage des données, et cela indépendamment du contexte d'utilisation qu'il soit professionnel ou personnel par exemple.

A l'origine, ce type d'appareil remplissait essentiellement la fonction d'organiseur en proposant des fonctionnalités telles que celle d'agenda et de carnet d'adresses électroniques, calculatrice, etc. Toutefois, avec l'accroissement des capacités de mémoire et de traitement, les assistants personnels numériques peuvent maintenant supporter des logiciels d'application tels que ceux rencontrés sur les ordinateurs portables ou de bureau. Ces applications, ainsi que tout ou partie des données utilisées par celles-ci, sont en général dédiées à un seul contexte d'utilisation (professionnel, personnel, ...).

Par conséquent, au sein d'un même appareil, cohabite un ensemble de programmes et de données hétérogènes parmi lesquels l'utilisateur doit faire lui-même le tri en fonction du contexte d'utilisation. En effet, par exemple, la technologie actuellement présente sur les assistants personnels numériques permet certes de créer un répertoire d'adresses personnelles et un autre répertoire professionnel, mais à l'intérieur d'un même carnet d'adresse (i.e. même application). De même, elle permet d'installer également des applications à usage professionnel et d'autres à usage personnel, mais sur le même menu d'applications. Enfin, la technologie actuelle autorise la création de fichiers de documents professionnels et personnels, mais sur le même répertoire. L'utilisateur ne dispose donc que de ses seules connaissances pour déterminer quelles applications et données se rapportent au contexte d'utilisation courant. Cependant, il devient rapidement impossible pour l'utilisateur de mémoriser le contexte d'utilisation pour chaque logiciel et fichier de données. Le confort d'utilisation de l'assistant numérique est alors considérablement réduit et le risque de confusion dans le traitement de l'information devient important.

Par conséquent, les appareils existants ne permettent pas de distinguer formellement les programmes et données à usage professionnel de ceux réservés à l'usage personnel par exemple. Il en résulte pour l'utilisateur une confusion dans les supports de contenus, à savoir que l'utilisateur ne peut pas distinguer l'outil qu'il utilise à titre personnel de celui qu'il utilise à titre professionnel car ils sont tous présents et disponibles quel que soit le contexte d'utilisation.

Ce besoin de différentiation de contexte d'utilisation dans ce type d'appareil devient impératif vis-à-vis de l'interpénétration croissante à laquelle on assiste entre les contextes d'utilisation, en raison notamment du développement des formes de travail nomade, du télétravail, etc..

### Objet et description succincte de l'invention

La présente invention vise à remédier aux inconvénients précités et à proposer une solution pour permettre aux utilisateurs d'ordinateurs de poche du type assistants personnels numériques de disposer d'un environnement de travail (logiciels, données,...) adapté pour chaque contexte d'utilisation qu'il aura préalablement défini.

Ces buts sont atteints grâce à un procédé pour différencier des programmes et des données dans un ordinateur de poche du type assistant personnel mobile selon au moins deux contextes d'utilisation prédéfinis, le chargement des programmes et l'accès aux données étant gérés par un système d'exploitation. Le procédé comprend les étapes suivantes:
a) formation d'une base de données des contextes dans laquelle on détermine, pour chaque contexte d'utilisation prédéfini, une liste de programmes et de données associés parmi l'ensemble des programmes et données enregistrés dans l'ordinateur de poche,
b) sélection d'un contexte d'utilisation parmi les contextes d'utilisation prédéfinis,
c) mémorisation du contexte d'utilisation sélectionné dans la base de données des contextes en tant que contexte courant en réponse à la sélection d'un contexte d'utilisation, et
d) interrogation de la base de données des contextes par le système d'exploitation pour identifier le contexte courant et activer les programmes et les données associés au contexte courant dans ladite base.

Ainsi, conformément au procédé de l'invention, l'utilisateur a la possibilité de paramétrer, dans une base de données, les programmes et les données enregistrés dans l'appareil en fonction de plusieurs contextes d'utilisation qu'il a prédéfinis (ex. contexte personnel et contexte professionnel). Cette base est alors utilisée par le système d'exploitation pour identifier le contexte courant d'utilisation choisi par l'utilisateur ainsi que les programmes et données associées à ce seul contexte d'utilisation. Il est alors possible de proposer à l'utilisateur un environnement de travail (liste programmes et données disponibles) entièrement dédié au contexte d'utilisation tel que défini par ce dernier dans la base des contextes. Par conséquent, quel que soit le contexte d'utilisation, il n'y a plus de risque de confusion entre les différents outils et informations présents dans l'appareil.

Comme certains outils, tel que l'agenda par exemple, sont utiles pour tous les contextes, dans l'étape a), une partie des programmes et des données peut être associée à plusieurs contextes d'utilisation prédéfinis.

Afin de proposer à l'utilisateur un environnement de travail dédié au contexte d'utilisation sélectionné, le système d'exploitation construit, dans l'étape d), un menu d'accès aux programmes et données comprenant seulement les programmes et données identifiés pour le contexte courant.

Les étapes b) à d) peuvent être mises en oeuvre automatiquement lors du démarrage de l'ordinateur ou en cours de fonctionnement sur l'initiative de l'utilisateur en agissant sur des moyens de sélection du contexte d'utilisation prévu sur l'appareil.

Lors du lancement d'un programme ou application, le système d'exploitation interroge la base de données des contextes de manière à lancer le programme avec les données associées au contexte courant dans la base de données des contextes. De cette façon, l'utilisateur n'aura accès qu'aux données pertinentes par rapport au contexte d'utilisation.

L'invention a également pour objet un ordinateur de poche du type assistant personnel numérique comprenant une pluralité de programmes et de données, le chargement et l'accès audits programmes et données étant gérés par un système d'exploitation. Conformément à l'invention, il comprend des moyens pour sélectionner un contexte d'utilisation parmi au moins deux contextes prédéfinis, une base de données des contextes qui comprend pour chaque contexte d'utilisation prédéfini une liste des programmes et des données associés. Le système d'exploitation est configuré pour interroger, en réponse à la sélection d'un contexte d'utilisation, la base de données des contextes de manière à activer, parmi la pluralité de programmes et de données, seulement les programmes et données associés audit contexte dans la base des contextes.

Pour permettre à l'utilisateur de sélectionner un contexte parmi plusieurs contextes prédéfinis, l'appareil peut comprendre des organes de commandes physiques tels que des boutons, chacun correspondant à un contexte distinct. Selon une variante, la sélection peut se faire directement à l'écran avec des moyens d'affichage réagissant à un moyen de commande, tel qu'un stylet par exemple.

Selon un aspect de l'invention, l'ordinateur de poche comprend des moyens logiciels pour construire un menu d'accès aux programmes et données comprenant seulement les programmes et données associés au contexte dans la base des contextes.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique globale du système mis en oeuvre dans l'invention,
- la figure 2 illustre un exemple de structure de base de données des contextes conformément à l'invention,
- la figure 3 est un ordinogramme illustrant les étapes mises en oeuvre dans l'invention lors du démarrage de l'appareil,
- la figure 4 illustre un exemple de structure d'une base de registres qui peut être utilisée conformément à l'invention,
- la figure 5 est un ordinogramme illustrant les étapes mises en oeuvre dans l'invention lors du lancement d'un programme ou application, et
- la figure 6 est un ordinogramme illustrant les étapes mises en oeuvre dans l'invention lors d'un changement de contexte d'utilisation en cours de fonctionnement de l'appareil.

### Description détaillée des modes de réalisation de l'invention

La présente invention s'applique aux assistants numériques personnels. Ces appareils sont de petits ordinateurs de poche qui, de façon connue, comprennent à leur échelle les ressources de base rencontrées dans les ordinateurs classiques. Plus précisément, ces assistants numériques comprennent notamment des moyens de traitement tel qu'un processeur permettant d'exécuter des programmes et des moyens de mémorisation pour le stockage des données. Pour permettre et gérer l'exécution des programmes, l'assistant comprend un système d'exploitation tel que le système d'exploitation WindowsCE®. De façon bien connue, le système d'exploitation est l'entité qui permet de gérer tous les programmes et notamment les logiciels d'application ainsi que les données correspondantes qui sont enregistrées dans l'appareil. C'est pourquoi, comme il sera expliqué en détail ci-dessous, la solution de la présente invention consiste à fournir des moyens pour paramétrer les applications et les données présentes dans l'assistant numérique selon chaque contexte d'utilisation afin de permettre au système d'exploitation de reconnaître et dissocier les applications/données en fonction du contexte d'utilisation sélectionné. Ainsi, après avoir sélectionné un contexte d'utilisation prédéfini sur l'assistant, l'utilisateur dispose d'un environnement de travail qui regroupe seulement les applications et les données associées à ce contexte.

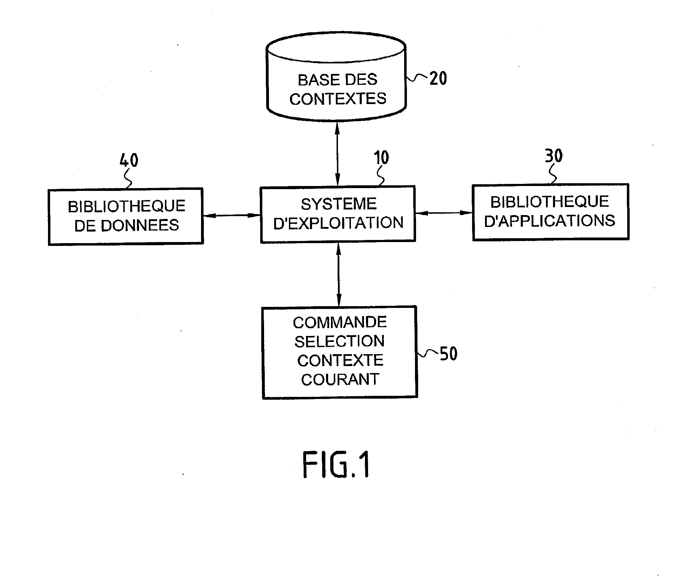

La figure 1 est un schéma simplifié montrant les relations entre les principaux éléments qui sont mis en oeuvre dans l'assistant personnel numérique conformément à l'invention. Comme représenté sur la figure 1, l'assistant numérique comprend un système d'exploitation 10 qui a en charge la gestion des applications et des données. Les différentes applications et données présentes dans l'assistant sont représentées ici respectivement sous forme d'une bibliothèque d'applications 30 et d'une bibliothèque de données 40, toutes deux accessibles par le système d'exploitation. La gestion des applications et des données (menu des applications disponibles, appel et exécution des applications, stockage des données dans des fichiers, etc.) par le système d'exploitation est bien connue en soi et ne sera pas décrite plus en détail par souci de simplification. Le système d'exploitation 10 est également en liaison avec une base de données des contextes d'utilisation appelée par la suite "base des contextes" 20 et un moyen de sélection 50 qui permet à l'utilisateur de sélectionner un contexte d'utilisation courant parmi plusieurs contextes d'utilisation prédéfinis.

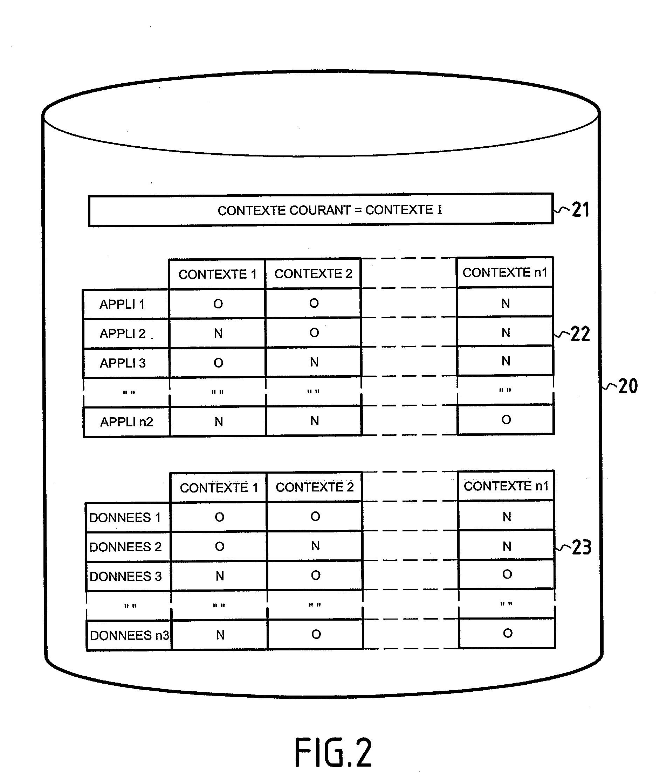

C'est dans la base des contextes 20 que l'utilisateur va paramétrer les applications et données de l'assistant en fonction des différents contextes d'utilisation qu'il souhaite pouvoir identifier sur son assistant comme par exemple un contexte d'utilisation professionnel et un contexte d'utilisation personnel. A cet effet, comme représentée en figure 2, la base des contextes 20 comprend deux tables 22, 23 pour le paramétrage respectivement des applications et des données. Pour paramétrer les applications, l'utilisateur écrit dans la table 22 en indiquant pour chaque contexte (i.e. contexte 1, contexte 2, ..., contexte n1) les applications (i.e. appli 1, appli 2, ..., appli n2) qui lui sont associées. Dans l'exemple présenté sur la figure 2, la lettre "O" indique que l'application est valide pour le contexte considéré alors que la lettre "N" indique que l'application ne peut être utilisée dans ce contexte. L'utilisateur procède de la même façon avec les données (i.e. données 1, données 2, ..., données n3) en écrivant dans la table 23.

Sur l'exemple de la figure 2, on observe que certaines applications, comme "appli 1", et certaines données, comme "données 1", sont valides dans plusieurs contextes, ici "contexte 1" et "contexte 2" qui sont assimilés respectivement au contexte d'utilisation professionnel et au contexte d'utilisation personnel. Cela vient du fait que certaines applications et/ou données peuvent être utilisées dans plusieurs contextes. Tel est le cas par exemple de la gestion de l'agenda qui sera commune à la fois au contexte professionnel et au contexte personnel. En effet, il peut être utile de pouvoir visualiser et gérer communément son agenda professionnel et son agenda personnel pour éviter les conflits dans la gestion de l'emploi du temps de l'utilisateur. Il est néanmoins toujours possible pour l'utilisateur de faire la distinction entre rendez-vous professionnels et rendez-vous personnels en incluant dans la table des données 23 des modalités de gestion d'accès différenciées.

En revanche, des applications telles que la gestion d'un album photo ou des jeux ainsi que les données qui s'y rapportent seront spécifiques au contexte personnel (contexte 2 sur la figure 2). De telles applications peuvent correspondre à "appli 2" dans la table 22, c'est-à-dire une application pour laquelle "O" n'est indiqué que pour "contexte 2". D'autre part, un logiciel de gestion de base de données ou d'administration des ventes par exemple sera spécifique au contexte professionnel (contexte 1 sur la figure). Ce logiciel peut correspondre à "appli 3" dans la table 22 car il est valide pour "contexte 1" (indication "O") alors qu'il ne l'est pas pour "contexte 2" (indication "N").

La base des contextes 20 comprend également une table 21 dans laquelle est stocké le contexte courant. Comme expliqué ci-dessous, l'utilisateur a la possibilité de sélectionner un contexte d'utilisation au démarrage ou en cours d'utilisation de son assistant personnel numérique. Le contexte sélectionné est alors stocké en tant que contexte courant dans la table 21 de la base des contextes, ce qui permet au système d'exploitation ainsi qu'aux applications d'identifier le contexte courant et de mettre à disposition de l'utilisateur respectivement les applications et les données telles qu'il les a paramétrées dans les tables 22 et 23 pour le contexte sélectionné.

La base des contextes illustrée à la figure 2 ne constitue qu'un exemple de structure de la base de données qui peut être utilisée dans la présente invention. La base des contextes peut présenter bien d'autres structures que l'homme du métier envisagera sans difficulté.

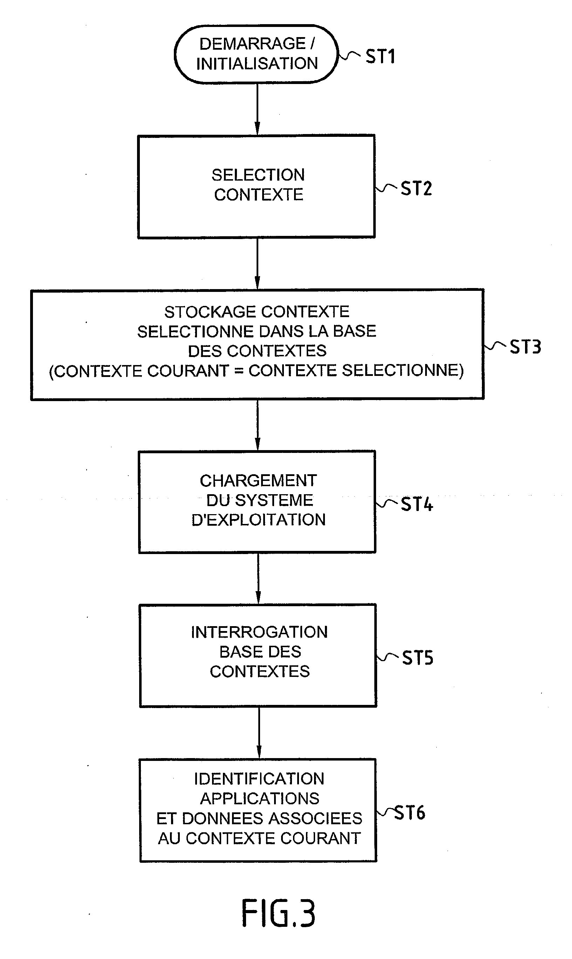

On explique maintenant en relation avec la figure 3 les étapes mises en oeuvre au démarrage d'un assistant numérique personnel conformément à la présente invention.

Lors de sa mise sous tension (étape ST1), l'utilisateur sélectionne le contexte (étape ST2) dans lequel il souhaite utiliser l'assistant personnel numérique. A titre d'exemple, l'utilisateur peut avoir préalablement défini deux contextes, à savoir un contexte professionnel et un contexte personnel de la manière décrite précédemment. L'opération de sélection du contexte d'utilisation par l'utilisateur peut être réalisée de plusieurs façons. L'utilisateur peut par exemple disposer sur l'assistant d'un moyen de sélection de type bouton. Dans ce cas, la sélection du contexte peut s'effectuer par pression sur un bouton de mise en marche (ex. à chaque pression un contexte différent est proposé) ou d'accès prédéfini, un bouton distinct correspondant alors à un contexte spécifique. Alternativement, l'utilisateur peut également sélectionner un contexte à partir d'un menu s'affichant au démarrage sur l'écran de l'assistant. Bien entendu, il existe d'autres moyens de sélection envisageables qui ne seront pas détaillés ici car ils sont bien connus.

Une fois le contexte d'utilisation sélectionné, il est stocké dans la base des contextes en tant que contexte courant (ST3) afin qu'il existe au sein de l'assistant une indication sur la nature du contexte d'utilisation courant à laquelle le système d'exploitation et les applications peuvent se référer. Ainsi, lors du chargement du système d'exploitation (étape ST4), ce dernier va interroger la base des contextes (étape ST5) pour, à partir du contexte courant enregistré, identifier et activer les applications et les données associées au contexte courant telles qu'elles ont été paramétrées par l'utilisateur dans la base des contextes.

Ces opérations peuvent être réalisées en utilisant par exemple la technologie connue de gestion des systèmes d'exploitation dite "multi-boot". Cette technologie permet, grâce à un partage de la mémoire, d'avoir sur un même appareil plusieurs versions ou configurations de systèmes d'exploitation. Ainsi, lors du démarrage de l'appareil, il est possible de choisir la version du système d'exploitation qui va être chargée. Dans la présente invention, chaque version du système d'exploitation correspond à un contexte d'utilisation prédéfini qui, une fois sélectionné, identifie les applications et données associées dans la base des contextes (étape ST5).

L'utilisateur dispose alors sur l'assistant d'un environnement de travail entièrement dédié au contexte d'utilisation qu'il a sélectionné au démarrage, c'est-à-dire qu'il ne dispose que des applications et données qu'il a paramétrées pour ce contexte. Cet environnement d'utilisation dédié peut se présenter sous la forme d'un menu dans lequel ne sont proposées que les applications et données associées au contexte telles qu'elles ont été paramétrées dans la base des contextes. Dans ce cas, après l'identification des applications et données associées, le système d'exploitation construit lors de son chargement un menu correspondant de la même façon que pour le "menu démarrer" du système d'exploitation WindowsCE® par exemple.

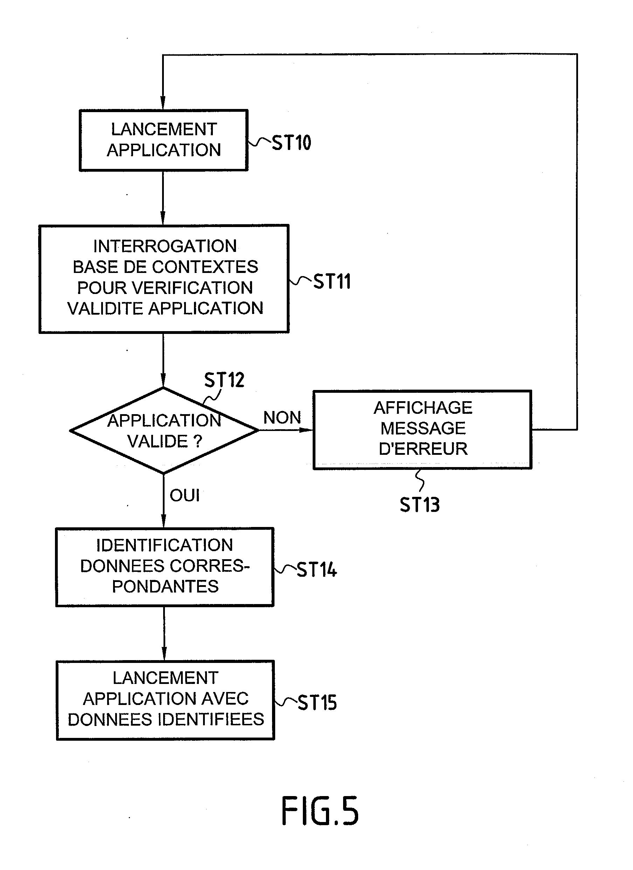

La figure 5 illustre les étapes mises en oeuvre lors du lancement d'une application au sein d'un contexte courant. Une fois l'assistant initialisé dans un contexte d'utilisation défini, l'utilisateur lance une ou plusieurs applications (étape ST10). Le lancement des applications étant géré par le système d'exploitation, ce dernier interroge la base des contextes pour s'assurer que l'application que l'utilisateur souhaite lancer est bien valide pour le contexte en cours (étape ST11). A cet effet, le système d'exploitation va lire dans la table 22 de la base 20 si l'application concernée a été paramétrée "O" ou "N" pour le contexte courant (étape ST12). Si l'application demandée n'est pas valide, un message d'erreur est affiché (étape ST13). Si l'application est reconnue pour le contexte en cours, les données associées à cette application sont identifiées dans la table 23 (étape ST14) et l'application est lancée avec ces données. L'utilisateur n'a alors accès avec l'application qu'aux données qu'il a paramétrées pour le contexte d'utilisation choisi. La vérification de la validité des applications et/ou données en fonction du contexte courant peut être évitée en ne proposant à l'utilisateur que les applications et les données valides pour le contexte courant. Cela peut être mis en oeuvre par l'affichage de menus et de répertoires où n'apparaissent que les fichiers concernés ou en distinguant les fichiers valides des autres (icônes spécifiques, couleurs, affichage caractères foncés/clairs, etc...).

Dans la présente invention, la sélection du contexte d'utilisation peut également s'effectuer en cours d'utilisation. Ainsi, il est en outre possible pour l'utilisateur de passer d'un contexte à l'autre, de telle sorte que, quelles que soient les applications sélectionnées dans un contexte donné, il lui soit néanmoins possible de consulter une application et/ou des données spécifiques à un autre contexte, puis de revenir dans le contexte initial le cas échéant. Cela améliore encore la souplesse et le confort d'utilisation de l'assistant. En effet, considérons le cas d'un utilisateur qui désire créer et enregistrer des données à titre personnel alors qu'il travaille dans une application qui permet certes de créer des données (ex. traitement de texte) mais qu'il a lancée sous un contexte d'utilisation professionnelle. Avec la possibilité de changement de contexte en cours d'utilisation que permet l'appareil selon l'invention, il lui est tout à fait possible de créer ces données avec l'application sous le contexte professionnel et de les enregistrer sous le contexte personnel sous réserve que l'application concernée soit communes aux deux contextes. Dans ce cas, il lui suffit de passer du contexte professionnel au contexte personnel seulement pour l'enregistrement des données dans un fichier ou autre puis de revenir au contexte professionnel pour poursuivre son travail. L'utilisateur peut ainsi changer ponctuellement de contexte en cours d'utilisation sans avoir à redémarrer l'assistant.

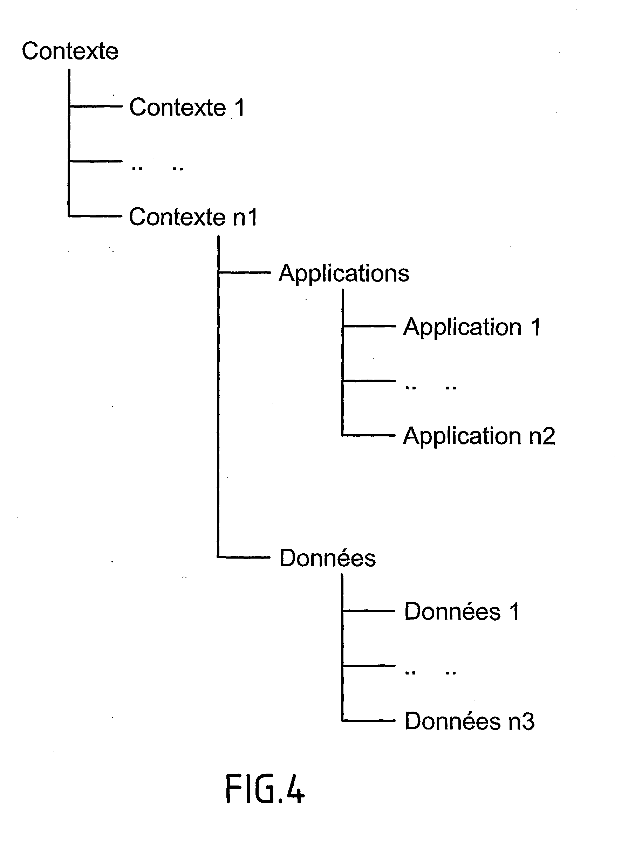

A cet effet, pour que le système d'exploitation puisse se référer à la base des contextes lors de son chargement non seulement au démarrage mais aussi en cours d'utilisation, on peut utiliser une base de registres à l'intérieur de laquelle auront été placés les contextes définis ainsi que les applications et données associées. Un exemple de structure d'une telle base de registres est illustré à la figure 4. De façon bien connue, la base de registres est une base de données propre au système d'exploitation dans laquelle se trouvent tous les paramètres de configuration des applications, du matériel comme du logiciel. Ainsi, à chaque changement de contexte correspondant à un nouveau chargement du système d'exploitation, la configuration d'utilisation correspondante au contexte sélectionné sera établie en fonction des paramètres enregistrés dans la base de registres. De plus, cette méthode de mise en oeuvre de l'invention présente l'avantage d'être facile et économique à intégrer dans les appareils existants. En effet, des systèmes d'exploitation, tels que WindowsCE®, actuellement présents dans les assistants personnels numériques, comprennent déjà une base de registres pour configurer l'appareil.

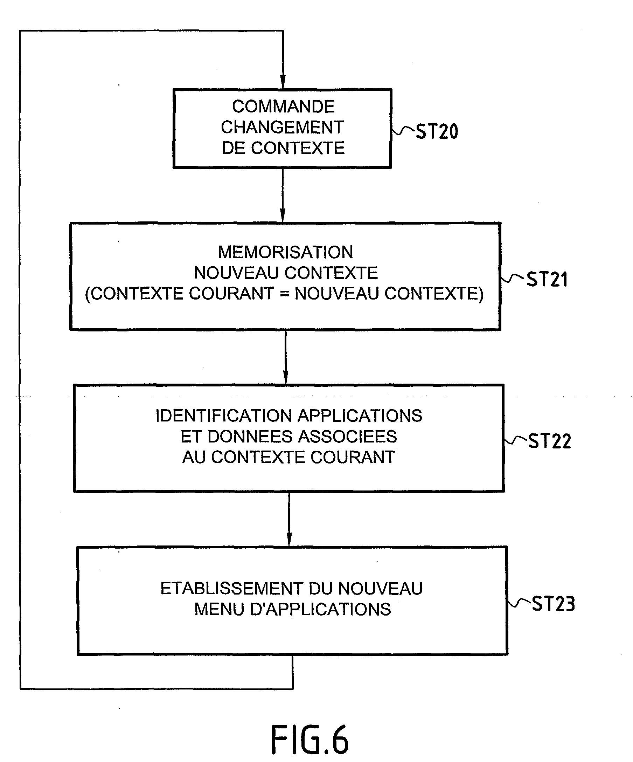

Un exemple d'une opération de changement de contexte en cours d'utilisation est illustré à la figure 6. L'utilisateur commande le changement de contexte en utilisant les moyens de sélection présents sur l'assistant (étape ST20). Comme décrit précédemment, ces moyens peuvent être des boutons, un menu d'affichage des contextes, etc... Une fois le nouveau contexte d'utilisation sélectionné, il est mémorisé dans la base des contextes 20 en écrivant dans la table 21 pour modifier le contexte courant (étape ST21). Le système d'exploitation identifie alors les applications et données associées au nouveau contexte afin de mettre à jour la liste des applications et données valides (ST22). A partir de la liste mise à jour, le système d'exploitation établit un nouveau menu d'applications pour l'utilisateur (ex "menu démarrer") (étape ST23). Si l'utilisateur ne souhaite changer de contexte que ponctuellement et désire revenir dans le contexte initial, il lui suffit de commander à nouveau un changement de contexte (ST20) le reste des opérations (étapes ST21 à ST23) étant automatique.

## Revendications

1. Procédé pour différencier des programmes et des données dans un ordinateur de poche selon au moins deux contextes d'utilisation prédéfinis, le chargement des programmes et l'accès aux données étant gérés par un système d'exploitation, **caractérisé en ce qu'**il comprend les étapes suivantes:
a) formation d'une base de données des contextes dans laquelle on détermine, pour chaque contexte d'utilisation prédéfini, une liste de programmes et de données associés parmi l'ensemble des programmes et données enregistrés dans l'ordinateur de poche,
b) sélection d'un contexte d'utilisation parmi les contextes d'utilisation prédéfinis,
c) mémorisation du contexte d'utilisation sélectionné dans la base de données des contextes en tant que contexte courant en réponse à la sélection d'un contexte d'utilisation,
d) interrogation de la base de données des contextes par le système d'exploitation pour identifier le contexte courant et activer les programmes et les données associés au contexte courant dans ladite base.

2. Procédé selon la revendication 1, **caractérisé en ce que** dans l'étape a), une partie des programmes et des données est associée à plusieurs contextes d'utilisation prédéfinis.

3. Procédé selon la revendication 1 ou 2, **caractérisé en ce que** dans l'étape d), le système d'exploitation construit un menu d'accès aux programmes et données comprenant seulement les programmes et données identifiés pour le contexte courant.

4. Procédé selon l'une des revendications 1 à 3, **caractérisé en ce que** les étapes b) à d) sont mises en oeuvre automatiquement lors du démarrage de l'ordinateur.

5. Procédé selon l'une des revendications 1 à 4, **caractérisé en ce que** les étapes b) à d) sont mises en oeuvre en cours de fonctionnement en réponse à une action de l'utilisateur sur des moyens de sélection.

6. Procédé selon l'une des revendications 1 à 5, **caractérisé en ce qu'**il comprend en outre une étape de lancement de programme dans laquelle le système d'exploitation interroge la base données des contextes de manière à lancer le programme avec les données associées au contexte courant dans la base de données des contextes.

7. Ordinateur de poche comprenant une pluralité de programmes et de données, le chargement et l'accès audits programmes et données étant gérés par un système d'exploitation, **caractérisé en ce qu'**il comprend des moyens pour sélectionner un contexte d'utilisation parmi au moins deux contextes prédéfinis, et une base de données des contextes qui comprend pour chaque contexte d'utilisation prédéfini une liste des programmes et des données associés et **en ce que** le système d'exploitation interroge, en réponse à la sélection d'un contexte d'utilisation, la base de données des contextes de manière à activer parmi la pluralité de programmes et de données seulement les programmes et données associés audit contexte dans la base des contextes.

8. Ordinateur de poche selon la revendication 7, **caractérisé en ce qu'**il comprend des organes de commandes physiques pour sélectionner un contexte d'utilisation parmi les contextes d'utilisation prédéfinis.

9. Ordinateur de poche selon la revendication 8, **caractérisé en ce qu'**il comprend des moyens d'affichage pour sélectionner un contexte d'utilisation parmi les contextes d'utilisation prédéfinis.

10. Ordinateur de poche selon l'une des revendications 7 à 9, **caractérisé en ce qu'**il comprend des moyens logiciels pour construire un menu d'accès aux programmes et données comprenant seulement les programmes et données associés au contexte dans la base des contextes.
